# EUROPEAN PATENT SPECIFICATION

(11) **EP 0 610 496 B1**
(45) Date of publication and mention of the grant of the patent: **31.03.1999**
(21) Application number: 94906750.8
(22) Date of filing: 06.08.1993
(51) Int. Cl.: B29C 65/00, B29C 65/34, F16L 47/02, C08J 5/12, B29K 23/00, B29K 105/24, B29L 31/24

(54) **A PROCESS FOR THE JOINING OF CROSSLINKED POLYOLEFIN BODIES**
VERFAHREN ZUM VERBINDEN VERNETZTER POLYOLEFINKÖRPER
PROCEDE D'UNION DE CORPS EN POLYOLEFINE RETICULEE

(30) Priority: 06.08.1992 GB 9216679
(43) Date of publication of application: 17.08.1994
(73) Proprietor: VICTAULIC PLC, Hitchin, Hertfordshire SG4 0UD (GB)
(72) Inventor: HILL, David, John 6 Field Close, Huntingdon Cambridgeshire PE18 9UA (GB)
(74) Representative: Hutchins, Michael Richard
(86) International application number: GB9301672
(87) International publication number: WO9403321

(56) References cited:
- EP-A- 0 008 912
- EP-A- 0 333 379
- EP-A- 0 378 406
- FR-A- 2 112 807
- PATENT ABSTRACTS OF JAPAN vol. 7, no. 149 (M-225)30 June 1983 & JP,A,58 059 017 ( DAINICHI NIPPON DENSEN KK ) 7 April 1983
- DATABASE WPI Week 8708, Derwent Publications Ltd., London, GB; AN 87-053480 & JP,A,62 009 092 (MITSUBISHI DENSEN KOGYO KK) 17 January 1987

## Description

The present invention relates to a method of joining a first body of crosslinked polyolefin material to a second body of polyolefin material according to the preamble of claim 1.

The present invention further relates to a polyolefin coupling sleeve for coupling together pipes and/or pipe elements according to the preamble of claim 8.

A method and a coupling sleeve of this kind is known from e.g. EP-A-0 333 379.

There are many applications, for example the construction of pipelines for carrying mains water or gas, which pipelines typically are buried beneath the ground, where increased durability and strength are desirable properties, and such properties can be imparted to the polyolefin by means of crosslinking.

Crosslinking is a process whereby individual polymer molecules are joined together to form larger molecules, thus modifying the molecular weight distribution of the polymer mass and the polymer properties. Crosslinking may be brought about, for example, by the use of peroxide or silane crosslinking agents, by electron beam crosslinking or by azo crosslinking. Taken to its ultimate conclusion the crosslinking process would result in all the molecules within the mass being linked to one another in a network, forming one large molecule. In all practical embodiments this is not achieved and crosslinked polyolefins consist of varying numbers of molecules large and small, that may be joined together, as in a network structure, or may be entangled within or without interpenetrating formations including crystalline structures. Although at one extreme crosslinking may be said to occur when simply one molecule has been joined to another, the effect of such a crosslinking would be insignificant within a substantial polymer mass. Crosslinking is therefore relevant as a process when the bulk polymer properties have been modified in a significant way. Conventionally this would be when properties are developed that are associated with the behaviour of true thermosetting plastics i.e. loss of thermoplasticity and enhanced resistance to deformation at elevated temperatures. However, low levels of crosslinking may significantly modify certain characteristics without complete loss of thermoplastic properties. Crosslinking sufficient to significantly modify the molecular weight distribution so that a change in Melt Flow Index (MFI) may be measured, may result in changes in certain physical properties such as resistance to environmental stress cracking, fracture toughness, and creep properties. As the crosslinking level increases these properties may continue to be enhanced although the MFI may become lower and lower until finally it becomes immeasurable. At this stage an ultra high molecular weight polyolefin has been formed and as crosslinking continues the crosslinked polymer may become increasingly of thermosetting character.

The level of crosslinking may be assessed by measurement of the gel content, for example in accordance with the method of ISO/DP 10147. The term "gel content" means the residual polyolefin remaining following exhaustive extraction of the non-crosslinked polyolefin material with a hydrocarbon solvent such as xylene. The gel content can conveniently be determined using a Soxhlet extraction apparatus or by boiling in a suitable vessel. The extraction of the uncrosslinked polyolefin is carried out over a period of at least 5 hours, and up to 24 hours. An inert atmosphere of nitrogen or other means to prevent oxidative degradation may be provided. The dried residue, expressed as a percentage of the initial sample mass gives a gel content (%). Typical commercial processes for crosslinking of polyolefins will normally give maximum gel content within the range 65-90%, although crosslinked polymer of any gel content from zero to the maximum level may be produced. At crosslinking levels below the gel point (0% gel), the MFI may be used as a crude indicator of molecular weight.

For example, crosslinked polyethylenes produced by electron beam crosslinking or azo crosslinking typically have maximum gel contents in excess of 60%, silane-crosslinked polyethylenes may have a maximum gel content in excess of 65% whereas maximum gel contents in excess of 70% can be achieved with peroxide crosslinking.

The use of fusion welding techniques to join polyolefin bodies or articles, such as pipes, is well known and such techniques involve causing the surfaces of two polyolefin bodies to become molten, pressing the surfaces together whilst still molten, and allowing the bodies to cool and the joint to harden. The term "electrofusion" is given to the technique in which a surface of one of the polyolefin bodies has embedded therein a heating wire which, on the passage of an electric current therethrough, heats and melts the adjacent surface portion. When this is done with the relevant surface contacting the surface of another polyolefin body or article, fusion of the two contacting surfaces occurs and a joint results.

There have been several proposals for methods of joining crosslinked polyolefins using fusion techniques. For example, JP-A-58059017 in the name of Dainichi Nippon Densen discloses a method for joining crosslinked polyolefins such as hot water supply pipes in which the crosslinked polyolefin is first cleaved, for example by heating, and then the cleaved polyolefin surfaces are welded together.

JP-A-62009092, in the name of Mitsubishi Densen, discloses a polyolefin coupler having a bilayer structure in which an inner layer of the polyolefin has a gel content of 70% or less whereas the outer layer of polyolefin has a gel content of 70% or more.

The above disclosures nothwithstanding, it has hitherto been considered by those skilled in the art of pipes and pipe fittings to be essential that at least one of the polyolefin bodies to be joined should be formed of a non-crosslinked, ie. thermoplastic, polyolefin. In this respect reference is made to EP-A-0333379, and US 4927184. In US 4927184 for example, it is taught that both surfaces to be welded together should be formed of a thermoplastic material.

Furthermore, in EP-A-0378406, it is taught that it is impossible to form electrofusion joints using crosslinked polyolefins.

Thus, there has not previously been available, to the best of the Applicants' knowledge, a method which enables crosslinked bodies to be joined together under field conditions found, for example, in pipeline construction.

It is an object of this invention to meet this need.

It has now been found, unexpectedly, and contrary to the teachings in the prior art of which we are aware, that a crosslinked polyolefin body can be joined directly to another crosslinked polyolefin body by means of the electrofusion technique, provided that the aggregate gel content of the two bodies is less than 70%, preferably less than 68%, and most preferably no greater than 65%.

In a first aspect the invention provides a method of joining a first body of crosslinked polyolefin material to a second body of polyolefin material, one of said bodies being a pipe and the other being a fusion coupling sleeve having a heating element embedded therein in or adjacent a surface thereof; the process comprising heating the heating element thereby to heat the surface of the coupling sleeve and an adjacent surface of the pipe to a temperature in excess of the crystalline melting point of the polyolefin materials at the said surfaces; and ensuring containment or confinement of the melted surfaces of the two bodies generally to the area of melting such that the surfaces fuse to form a joint; and subsequently allowing the fused surfaces to cool and harden; characterised in that the first body is formed from a crosslinked polyolefin having a gel content in excess of 65% and the second body is formed of crosslinked polyolefin having a gel content of greater than 0% and less than 65%, and in that the aggregate gel content of the two bodies at the surfaces thereof is less than 70%.

The term "aggregate gel content" as used herein is the mean value of the gel content of the polyolefins at the weld interface between the two bodies, immediately prior to welding.

It is preferred that the aggregate gel content is less than 68%, more preferably no greater than 65%, for example in the range 40% to 65%, more preferably 55-65%.

The gel content of one polyolefin body is in excess of 65%, for example up to 80%, whereas the gel content of the other body is less than 65%, for example up to 50%, provided that the gel content is greater than 0%.

The term "gel content" as used herein means the residual polyolefin remaining following exhaustive extraction of the crosslinked polyolefin material with the hydrocarbon solvent xylene. The gel content can conveniently be determined using a Soxhlet extraction apparatus, and typically the extraction of the polyolefin is carried out over a period of five hours with xylene.

Extraction of the polyolefin with xylene is believed to remove non-crosslinked polymer chains and small aggregates of crosslinked polymer chains, leaving an insoluble matrix of cross-linked material in the form of a gel.

The crystalline melting points of crosslinked polyolefins generally range from about 120°C upwards. For example, the crystalline melting points of crosslinked polyethylenes generally lie in the range 120°C to 130°C; the melting point generally increasing with crystallinity or density. Other polyolefins may have higher or lower melting points.

At the crystalline melting point, the crosslinked polyolefins do not form a flowable liquid as do the thermoplastic non-crosslinked polyolefins, but rather they generally retain their shape and form a jelly-like mass.

It has been found surprisingly that contrary to what is stated in, for example US 4927184, polyolefins having an aggregate gel content up to about 65% can be fusion-welded together.

The invention is particularly applicable when an electrofusion techniques are used in which a portion of the area of the relevant surface of the crosslinked polyolefin article has embedded therein a heating wire adapted, on the passage of an electric current therethrough, to heat and melt the adjacent surface portion. When this is done with the relevant surface contacting a surface of another crosslinked polyolefin body or article, it is possible to ensure that the surfaces are held together in such a manner as to provide confinement or containment of the molten surface of one crosslinked polyolefin body, whilst the expansion of the materials as they heat and melt provides the excess pressure required.

It is to be stressed that the Applicants have found that in practical terms the required pressure is that which is required to ensure intimate contact at the melt interface between the two materials to be joined. In the case of two uncrosslinked materials being welded together, both materials would easily soften and flow at elevated temperature rapidly giving the required melt interface, but when the materials are crosslinked they will remain intractable at elevated temperature thus often requiring more care in ensuring that there is intimate contact at the melt interface.

In practice in carrying out the invention, the surfaces must be held together in a pressurised melt contained condition for adequate time to enable migration of molecular chains from one crosslinked polyolefin body into the surface of the other crosslinked polyolefin and ensure adequate and satisfactory fusion or welding.

It is to be understood that, although the invention is particularly applicable with electrofusion techniques in which the heating element is a wire heating coil, it can also be carried out using, for example, electrofusion techniques using a conductive polymer instead of wire; or inductive heating of an embedded wire, metal loop, metal sheet, grid or other form within an enclosed system similar to conventional electrofusion welding techniques; or other radiative heating methods using electromagnetic radiation, e.g. microwave energy, to heat either modified polymers or inserted receptive components and transfer heat.

Pipes to which the invention may be applied would include, but not be restricted to, under floor heating and hot/cold water pipes; district heating pipes and sheathing; flue pipes; industrial pipes; and chemical plant pipes.

The invention includes within its scope a joint between one crosslinked polyolefin body and another crosslinked polyolefin body formed by a method as herein defined.

In a further aspect the invention provides a polyolefin coupling sleeve for coupling together pipes and/or pipe elements, the coupling sleeve having a heating element embedded in or adjacent a surface thereof, which surface in use is arranged to contact and fuse with a surface of a pipe or pipe element; characterised in that in at least the region of the heating element, the coupling sleeve is formed from crosslinked polyolefin wherein the gel content of the crosslinked polyolefin is greater than 0%.

Particular embodiments of the invention are disclosed in the dependent claims.

It is understood, that the term "polyolefin coupling sleeve for coupling together" means an unused polyolefin coupling sleeve in which the polyolefin is crosslinked before inserting pipes into the ends of the sleeve and carrying out the electrofusion process.

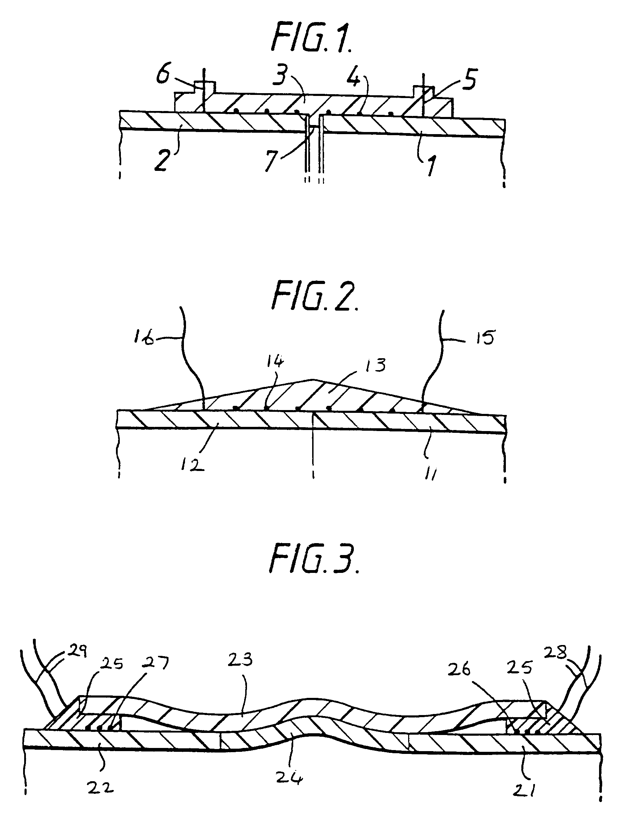

In order that the invention may be more readily understood, a number of embodiments of the use of the method of the present invention will now be illustrated with reference to the accompanying drawings in which Figure 1 is a schematic sectional elevation through one half of a first embodiment of a pipe joint in accordance with the invention.

Referring now to Figure 1, there is illustrated a technique for coupling two crosslinked polyethylene pipes 1, 2 by means of a crosslinked polyethylene annular coupling sleeve 3. The crosslinked polyethylene sleeve is provided with an electrical wire heating element wound helically within it connecting between electrical terminal wires 5, 6. A removable central annular internally protruding register 7 is provided to locate against the ends of the two crosslinked polyethylene pipes. In operation, after assembling the two pipes 1, 2 within the sleeve so as to engage the centre register, electrical current is passed through the wire 4 embedded in the sleeve, so that the sleeve is heated at its inner surface, whilst the polyethylene pipes are heated on their external radial surfaces, both surfaces being heated to a temperature above the crystalline melting point of the polymer. At such a temperature the surfaces become jelly-like.

The heating of the component materials of the inner surface of the sleeve, and the radially outer surfaces of the juxtaposed pipes, causes a tendency to expand so that their mating jelly-like surfaces are pressed together under considerable pressure from such expansive force.

Upon disconnecting the electrical terminal wires 5, 6, the sleeve 3 and the pipes 1 and 2 cool and harden and it is found that a most satisfactory joint between the pipes through the use of the sleeve is achieved. The joints are not only firm but are also fluid-tight, and can satisfactorily be subjected to pressure testing at elevated temperature.

The following comparative examples illustrate the importance of the aggregate gel content in determining the strength of the welded joint.

### COMPARATIVE EXAMPLES

### Example 1

Two one metre sample lengths of 32mm SDR 11 peroxide-crosslinked polyethylene pipe having a gel content of 80% were inserted into a 32mm silane-crosslinked electrofusion coupler having a gel content of 50% (sample 1), the arrangement of pipes and electrofusion coupler being as illustrated in Figure 1.

Two further one metre (identical) sample lengths of 32mm SDR 9 peroxide-crosslinked polyethylene pipe having a gel content of 80% were inserted into a 32mm silane-crosslinked electrofusion coupler having a gel content of 65% (sample 2).

Both samples were fused by passing a current at 40 volts for 60 seconds, and then allowing the fused assembly to cool. The samples were then machined into strip test pieces in order that a 180°C peel test of the weld zone could be performed. Sample 2 exhibited sudden catastrophic failure along the weld line, at a moderate load of less than 10MPa. Sample 1 showed no failure until a load of >20MPa was applied, when the polymer failed by a normal tensile failure mechanism, there was no failure along the weld line.

### Example 2

Two further samples 1 and 2 were prepared, identical to those in Example 1. Both samples were subjected to a thermal cycling regime by pumping water through them at 80°C and 20°C for 12 hours respectively for a period of 50 cycles (external medium was air). On pressure testing at 10 bar following thermal cycling, leakage was found from sample 2 but no leakage from sample 1.

The foregoing examples illustrate that electrofusion coupler/pipe combinations having an aggregate gel content of 65% (sample 1) form strong durable welded joints, whereas the welded joints formed when the aggregate gel content is as high as 72.5% are relatively weak and break down after thermal cycling.

Thus, by means of the invention, a surprisingly successful method of jointing crosslinked polyolefin bodies with other crosslinked bodies is achieved.

It will be readily apparent that numerous alterations and modifications may be made to the particular embodiment illustrated in the drawing without departing from the underlying principles of the invention, as defined in the claims appended hereto.

## Claims

1. A method of joining a first body (1, 2) of crosslinked polyolefin material to a second body (3) of polyolefin material, one of said bodies being a pipe (1, 2) and the other being a fusion coupling sleeve (3) having a heating element (4) embedded therein in or adjacent a surface thereof; the process comprising heating the heating element (4) thereby to heat the surface of the coupling sleeve (3) and an adjacent surface of the pipe (1, 2) to a temperature in excess of the crystalline melting point of the polyolefin materials at the said surfaces; and ensuring containment or confinement of the melted surfaces of the two bodies (1, 2; 3) generally to the area of melting such that the surfaces fuse to form a joint; and subsequently allowing the fused surfaces to cool and harden; characterised in that the first body (1, 2) is formed from a crosslinked polyolefin having a gel content in excess of 65% and the second body (3) is formed of crosslinked polyolefin having a gel content of greater than 0% and less than 65%, and in that the aggregate gel content of the two bodies (1, 2; 3) at the surfaces thereof is less than 70%.

2. A method according to claim 1 wherein the aggregate gel content is less than 68%.

3. A method according to claim 2 wherein the aggregate gel content is no greater than 65%.

4. A method according to claim 3 wherein the aggregate gel content is in the range 40% to 65%.

5. A method according to Claim 4 wherein the aggregate gel content is in the range 55% to 65%.

6. A method according to any one of the preceding Claims wherein the polyolefin is a polyethylene.

7. A method according to claim 1 wherein the gel content of the second body (3) is up to 50%.

8. A polyolefin coupling sleeve (3) for coupling together pipes and/or pipe elements (1, 2), the coupling sleeve (3) having a heating element (4) embedded in or adjacent a surface thereof, which surface in use is arranged to contact and fuse with a surface of a pipe or pipe element (1, 2); characterised in that in at least the region of the heating element (4), the coupling sleeve (3) is formed from crosslinked polyolefin wherein the gel content of the crosslinked polyolefin is greater than 0%.

9. A polyolefin coupling sleeve according to Claim 8 wherein the gel content of the crosslinked polyolefin is up to 65% by weight of the crosslinked polyolefin.

10. A polyolefin coupling sleeve according to Claim 8 or Claim 9 wherein the polyolefin coupling sleeve is formed substantially entirely of crosslinked polyolefin.

11. A polyolefin coupling sleeve according to any one of Claims 8 to 10 wherein the embedded heating element (4) is an electrical wire heating coil.

12. A coupling sleeve according to any one of Claims 8 to 11 which is an annular coupling sleeve (3) for coupling together two crosslinked polyolefin pipes (1, 2) in an end to end manner.

## Patentansprüche

1. Verfahren zum Verbinden eines ersten Körpers (1, 2) aus vernetzten Polyolefinen mit einem zweiten Körper (3) aus vernetzten Polyolefinen, wobei einer der Körper ein Rohr (1, 2) und der andere eine schmelzbare Verbindungsmuffe (3) mit einem an oder im Bereich ihrer Oberfläche angeordneten Heizelement (4) ist, indem das Heizelement (4) zum Aufheizen der Oberfläche der Verbindungsmuffe (3) und einer benachbarten Oberfläche des Rohres (1, 2) auf eine Temperatur oberhalb der Erweichungstemperatur der Polyolefine an diesen Oberflächen erhitzt wird, die geschmolzenen Oberflächen der beiden Körper (1, 2; 3) im wesentlichen auf den Schmelzbereich eingeschränkt werden, so daß die Oberflächen verschmelzen und einen Verbund bilden, und anschließend die verschmolzenen Oberflächen abgekühlt und erhärtet werden, dadurch gekennzeichnet, daß der erste Körper (1, 2) aus einem vernetzten Polyolefin mit einem Gelanteil über 65% und der zweite Körper (3) aus einem vernetzten Polyolefin mit einem Gelanteil höher als 0% und geringer als 65% ist, und daß der Gesamtgelanteil der beiden Körper (1, 2; 3) an ihren Oberflächen geringer als 70% ist.

2. Verfahren nach Anspruch 1, wobei der Gesamtgelanteil geringer als 68% ist.

3. Verfahren nach Anspruch 2 wobei der Gesamtgelanteil nicht höher als 65% ist.

4. Verfahren nach Anspruch 3 wobei der Gesamtgelanteil im Bereich zwischen 40% und 65% liegt.

5. Verfahren nach Anspruch 4, wobei der Gesamtgelanteil im Bereich zwischen 55% und 65% liegt.

6. Verfahren nach einem der vorangehenden Ansprüche, wobei das Polyolefin ein Polyethylen ist.

7. Verfahren nach Anspruch 1, wobei der Gelanteil des zweiten Körpers (3) bis zu 50% ist.

8. Verbindungsmuffe (3) aus Polyolefinen zum Verbinden von Rohren und/oder Rohrelementen (1, 2) mit einem an oder im Bereich ihrer Oberfläche angeordneten Heizelement (4), wobei diese Oberfläche im Betriebszustand so angeordnet ist, daß sie mit einer Oberfläche eines Rohres oder eines Rohrelements (1, 2) in Berührung tritt und verschmilzt, dadurch gekennzeichnet, daß die Verbindungsmuffe (3) zumindest im Bereich des Heizelements (4) aus einem vernetzten Polyolefin mit einem Gelanteil größer 0% besteht.

9. Verbindungsmuffe nach Anspruch 8, wobei der Gelanteil des vernetzten Polyolefins bis zu 65 Mass.% bezogen auf das Gewicht des vernetzten Polyolefins beträgt.

10. Verbindungsmuffe nach Anspruch 8 oder 9, wobei die Verbindungsmuffe aus Polyolefinen im wesentlichen vollständig aus vernetzten Polyolefinen besteht.

11. Verbindungsmuffe nach einem der Ansprüche 8 bis 10, wobei das Heizelement (4) eine elektrische Drahtheizspirale ist.

12. Verbindungsmuffe nach einem der Ansprüche 8 bis 11, wobei die Verbindungsmuffe (3) ringförmig ist, um zwei Rohre aus vernetzten Polyolefinen an ihren Enden zu verbinden.

## Revendications

1. Procédé d'assemblage d'un premier corps (1, 2) en un matériau de type polyoléfine réticulée à un second corps (3) en un matériau de type polyoléfine, l'un desdits corps étant un tuyau (1, 2) et l'autre étant un manchon de couplage par fusion (3) ayant un élément chauffant (4) noyé dans celui-ci ou adjacent à une surface de celui-ci ; le procédé comprenant le chauffage de l'élément chauffant (4) afin de chauffer la surface du manchon de couplage (3) et une surface adjacente du tuyau (1, 2) à une température supérieure au point de fusion cristallin des matériaux de type polyoléfine au niveau desdites surfaces ; et le fait d'assurer la retenue ou le confinement des surfaces fondues des deux corps (1, 2 ; 3) généralement dans la zone de fusion de sorte que les surfaces fondent de façon à former un assemblage ; et ensuite le fait de permettre aux surfaces fondues de refroidir et de durcir ; caractérisé en ce que le premier corps (1, 2) est formé à partir d'une polyoléfine réticulée ayant une teneur en gel supérieure à 65% et en ce que le second corps (3) est formé d'une polyoléfine réticulée ayant une teneur en gel supérieure à 0% et inférieure à 65%, et en ce que la teneur en gel des agrégats des deux corps (1, 2 ; 3) à leurs surfaces est inférieure à 70%.

2. Procédé selon la revendication 1, dans lequel la teneur en gel des agrégats est inférieure à 68%.

3. Procédé selon la revendication 2, dans lequel la teneur en gel des agrégats n'est pas supérieure à 65%.

4. Procédé selon la revendication 3, dans lequel la teneur en gel des agrégats est dans la gamme de 40% à 65%.

5. Procédé selon la revendication 4, dans lequel la teneur en gel des agrégats est dans la gamme de 55% à 65%.

6. Procédé selon l'une quelconque des revendications précédentes, dans lequel la polyoléfine est du polyéthylène.

7. Procédé selon la revendication 1, dans lequel la teneur en gel du second corps (3) va jusqu'à 50%.

8. Manchon de couplage en polyoléfine (3) pour coupler ensemble des tuyaux et/ou des éléments de tuyau (1, 2), le manchon de couplage (3) ayant un élément chauffant (4) noyé dans celui-ci ou adjacent à une surface de celui-ci, cette surface à l'emploi étant disposée de façon à être en contact et à fondre avec une surface d'un tuyau ou d'un élément de tuyau (1, 2), caractérisé en ce que dans au moins la région de l'élément chauffant (4), le manchon de couplage (3) est formé à partir d'une polyoléfine réticulée dans laquelle la teneur en gel de la polyoléfine réticulée est supérieure à 0%.

9. Manchon de couplage en polyoléfine selon la revendication 8, dans lequel la teneur en gel de la polyoléfine réticulée va jusqu'à 65% en poids de la polyoléfine réticulée.

10. Manchon de couplage en polyoléfine selon la revendication 8 ou la revendication 9, dans lequel le manchon de couplage en polyoléfine est formé essentiellement entièrement d'une polyoléfine réticulée.

11. Manchon de couplage en polyoléfine selon l'une quelconque des revendications 8 à 10, dans lequel l'élément chauffant (4) noyé est une bobine de fil électrique de chauffage.

12. Manchon de couplage selon l'une quelconque des revendications 8 à 11 qui est un manchon de couplage annulaire (3) pour coupler ensemble bout à bout deux tuyaux en polyoléfine réticulée (1, 2).
